# EUROPEAN PATENT SPECIFICATION

(11) **EP 0 587 402 B1**
(45) Date of publication and mention of the grant of the patent: **28.05.1997**
(21) Application number: 93307037.7
(22) Date of filing: 07.09.1993
(51) Int. Cl.: F16N 7/36, F04B 39/02

(54) **Crankshaft lubrication system**
Kurbelwellenschmiersystem
Système de lubrification de vilebrequin

(30) Priority: 07.09.1992 GB 9218873
(43) Date of publication of application: 16.03.1994
(73) Proprietor: MATSUSHITA REFRIGERATION INDUSTRIES (S) PTE Ltd., Singapore 469267 (SG)
(72) Inventor: Khoo, Chew Thong, Singapore 1337 (SG); Yeo, Kerk Kan, Singapore 1646 (SG)
(74) Representative: Driver, Virginia Rozanne

(56) References cited:
- CH-A- 403 813
- FR-A- 1 126 277
- GB-A- 968 686
- US-A- 4 865 527
- US-A- 5 088 579

## Description

This invention relates to improvements in the lubrication system of rotating machines, and in particular, of sealed reciprocating and rotary compressors for refrigeration and air conditioning.

The lubrication of sealed compressors for cooling fluids is well known in the art. Typically, an electric motor drive is built into a sealed housing or shell, and has a stator or electric armature affixed therein and a rotor assembly assembled into the cylindrical passage of the stator. This rotor assembly includes a rotor and a crankshaft which is inserted into the cylindrical passage of the rotor by interference fit. This crankshaft is rotationally supported and journalled in a bearing housing in either one or both sides of the rotor. As these compressors are mounted vertically, i.e., with the rotor axis vertical, oil or lubricant reposes in a sump at the base of the crankshaft. Lubrication is effected when the rotary motion of the crankshaft drives the oil by centrifugation upward from the sump through the hollow centre of the crankshaft. Conventional crankshafts have in some cases one or more axial bores disposed off axis and in other cases a helical shaped oil groove on the external surface of the crankshaft to carry oil to the upper portion of the crankshaft, where oil passes through one or more lubricating channels to lubricate and to cool the bearings or other moving parts.

As temperature rises within the sealed compressors after some length of operation, the oil pumping capacity of conventional lubrication system decreases as the viscosity of the lubricating oil diminishes. US-A-4,865,527 taught the improvement of using an oil pick up tube which featured a spring positioned within the oil pick up tube. The springs took several forms including ring and plate; the function remains the same: to scoop up the oil in the sump in order to compensate for the loss in viscosity of the oil. The requirement for the oil pick up tube and springs which must be positioned within the shaft necessitates additional material and process costs. As such, this approach raises the production cost of the rotor assembly.

US-A-5,007,808 disclosed a slotted rotor lubrication system which employed a smaller than usual rotor shaft. It is claimed that the slotted rotor lubrication system would lower the production costs by reducing the use of shaft material and reducing machining requirements. It is unclear whether the corresponding modifications required on the rotor will reduce the overall production and manufacturing costs of the rotor assembly of a sealed compressor.

According to an aspect of the present invention, there is provided a crankshaft assembly for a sealed compressor comprising a sealed casing in which at least one alternating motor-driven compressor assembly and at least one oil reservoir are disposed therein, the crankshaft assembly including at least one vertical-axis crankshaft provided with at least one longitudinal interior lubrication duct communicating with points on an exterior surface of said crankshaft and with an upper end of the crankshaft eccentric to the axis of rotation thereof,
a lower member coupled to a lower end of said interior duct of the crankshaft and comprising a substantially conical nose section arranged to be submerged in said oil reservoir,
characterised in that said lower member is integrated with said crankshaft, and said nose section of said lower member terminates in an elliptical opening, the plane parallel with said elliptical opening having an angle of cut φ with an imaginary plane, said imaginary plane being perpendicular to the vertical-axis of rotation of said crankshaft.

A crankshaft lubrication system is described for generating increased oil pumping capacity and oil pressure in a sealed compressor for cooling fluids. The lower portion of an integral crankshaft is cut at a slanted angle to increase the inlet area for picking up more oil from a sump or oil reservoir. By varying the angle of cut at the lower portion of an integral crankshaft, one achieves oil pumping rates over a wide range of values while using a standard ,size crankshaft. This approach not only simplifies the manufacture of lubrication system for sealed compressors, but also lowers the overall production costs of such compressors. While the efficiency of sealed compressors is maintained under the present invention, the noise emissions from such compressors are lowered significantly.

A preferred embodiment of the present invention provides a vertical-axis crankshaft for a sealed compressor with increased pumping capacity and increased oil pressure.

A further embodiment of the present invention simplifies the crankshaft lubrication system of sealed compressors.

Yet a further advantage is that the overall production cost of sealed compressors is lowered by eliminating the use of an oil pick up tube and spring or oil plate.

Preferred embodiments of the present invention also reduce the noise emissions from sealed compressors.

For a better understanding of the present invention and to show how the same may be carried into effect reference will now be made by way of example to the accompanying drawings in which:-

FIG. **1** illustrates a longitudinal sectional view of a sealed compressor of cooling fluids, in which the improvements are applied according to the present invention.

FIG. **2** illustrates a longitudinal front view of a prior art crankshaft with an oil pick up tube.

FIG. **3** illustrates a longitudinal front view of another prior art crankshaft with an oil pick up tube and a plate oil supplier.

FIG. **4** illustrates a longitudinal front view of the preferred embodiment of the present invention.

FIG. **5** illustrates a longitudinal side view of the preferred embodiment of the present invention.

FIG. **6** illustrates the oil pick up characteristics of a sealed compressor using a prior art crankshaft versus one using the preferred embodiment of the present invention.

FIG. **7** illustrates the noise emissions from a sealed compressor using the prior art crankshaft versus one using the preferred embodiment of the present invention.

A crankshaft lubrication system for generating increased oil pumping capacity in a sealed compressor is described. In the following description, numerous specific details are set forth such as specific parts of a crankshaft in order to provide a thorough understanding of the present invention. In other instances, well known elements such as the rotor and the stator of the electric motor drive are not described in detail in order not to unnecessarily obscure the present invention. It should be understood by one skilled in the art that a sealed compressor referred to both the reciprocating and rotary types.

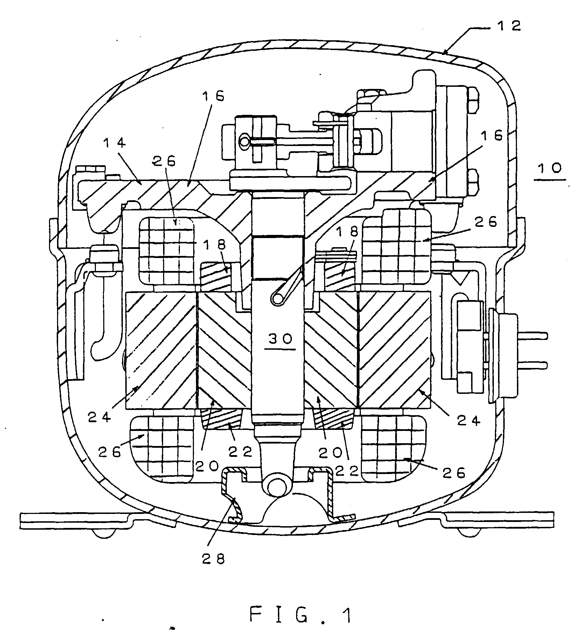

Referring to FIG. **1** , a sealed compressor **10** includes a sealed casing **12** with an electric motor-driven assembly **14** housed in the interior thereof. The assembly **14** includes a bearing housing **16**, a rotor assembly having upper rotor ring **18**, rotor **20** and lower rotor ring **22**. The rotor assembly fits into a cylindrical passage in the stator **24** and coil **26**. A sump or oil reservoir **28** is located at the lower end of the electric motor-driven assembly **14**. The rotor assembly further includes a crankshaft **30** that is rotationally supported and journalled in the bearing housing **16**. The lower portion of said crankshaft **30** reposes in the sump **28**. Lubrication is effected when the rotary motion of the crankshaft **30** drives the oil by centrifugation upward from the sump **28** through the hollow centre (not shown) of the crankshaft.

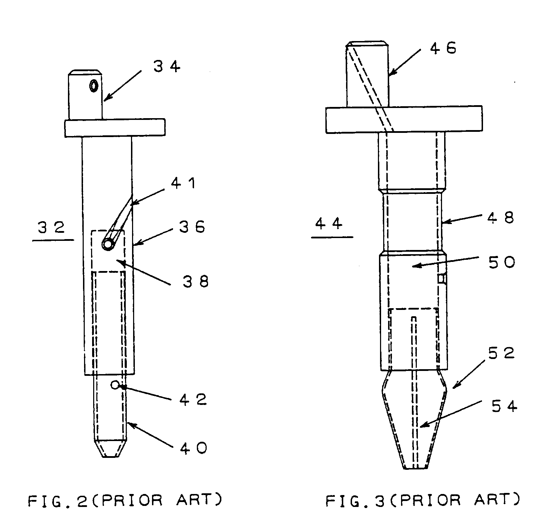

FIG. **2** is a drawing of a prior art crankshaft **32**. The crankshaft **32** featured a crank **34** in the upper portion, a shaft **36** in the centre, an axial bore **38**, and an oil pick up tube **40** in the lower portion. The oil pick up tube **40** is coupled at one end to the axial bore **38**. The other end of the oil pick up tube **40** is dipped into a sump of a sealed compressor, both of which are not shown. Oil within the sump is drawn upwards by centrifugation via the oil pick up tube **40** and the axial bore **38** to oil groove **41** where the bearing housing is lubricated and cooled. The disadvantage of the prior art crankshaft illustrated in FIG. **2** is its limited oil pumping capacity because the area for picking up oil is limited. Furthermore, as the temperature rises after some length of operation, the viscosity of oil decreases. As result, the oil pumping capacity of the lubrication system is reduced.

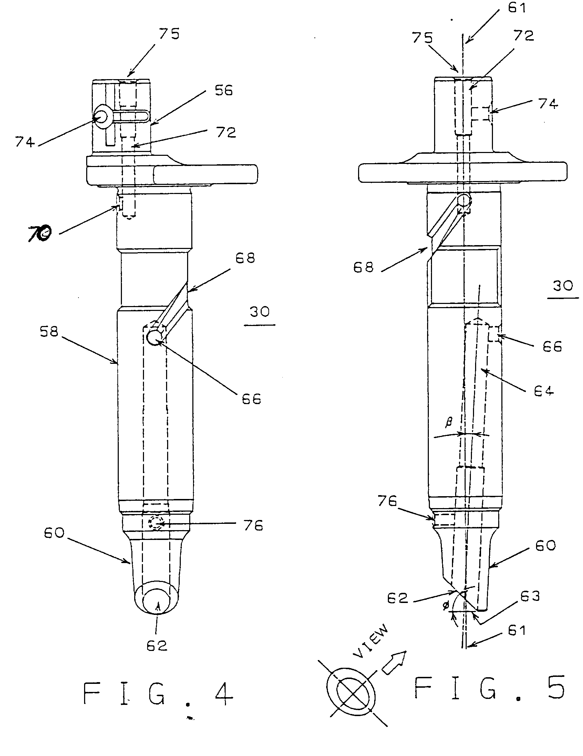

FIG. **3** illustrates another prior art crankshaft **44** for improving the oil pumping capacity of sealed compressors. The crankshaft **44** has a crank **46**, a shaft **48** having an interior lubricating duct **50**, an oil pick up tube **52** featuring a plate-oil supplier **54** positioned therein. Here, the plate-oil supplier **54** refers generically to a broad class of devices which are inserted into the oil pick up tube for increasing the oil pumping capacity of the crankshaft lubricating system. An example of the plate-oil supplier **54** is the spring taught in US-A-4,865,527. Another example is the solid plate as shown in FIG **3**. The crankshaft **44** operates on the same principle as crankshaft **32** except that the plate-oil supplier **54** provided a greater surface area for picking up oil from the sump. While the problem of oil pumping capacity was partially addressed by lubricating systems featuring crankshaft **44**, the production costs of manufacturing such a crankshaft is high.

Referring to FIGS.**4** and **5**, the preferred embodiment of the present invention is illustrated in alternate views. The improved lubrication system of the present invention features an improved crankshaft **30** having an integral body including a crank **56**, a shaft **58** and a lower portion **60**. The lower portion **60** of the crankshaft **30** has a substantially conical section submerged in the sump (not shown) and terminating with an elliptical opening **62**. Referring to FIG.**5**, the plane of the elliptical opening 62 has an angle of cut ø with an imaginary horizontal-axis **63**. The imaginary-axis **63** is perpendicular to an imaginary vertical-axis **61** of the crankshaft **30**.

Referring again to FIGS. **4** and **5**, the crankshaft **30** is provided with a slanted interior lubrication duct **64** which communicates between the elliptical opening **62** and the port **66**. The interior lubrication duct **64** has an angle β with the imaginary vertical-axis **61** of the crankshaft **30**. A bearing groove **68** on the exterior surface of the crankshaft **30** provides the distribution channel between the ports **66** and **70**. An eccentric lubrication duct **72** communicates among outflow orifices **70, 74** and **75**. It should be understood by one skilled in the art that the longitudinal axis of the lubrication duct **72** may be at an angle with the imaginary vertical-axis **61** of the crankshaft **30**. A bleeding orifice **76** is provided for venting air bubbles in the oil while it is being picked up from the sump.

The upper end of the interior lubrication duct 64 ends in a first substantially conical section and a second substantially conical section of variable contour depending on a profile of the crankshaft.

When the electric motor of the sealed compressor drives the rotor, the crankshaft **30** rotates and the elliptical opening **62** acts as a scoop to pick up oil from the sump continuously by centrifugal action. There the oil is drawn upwards through the slanted lubrication duct **64** and exits port **66**. The oil then moves further upwards through the annulus formed by the bearing groove **68** and the interior wall of the bearing housing **18** as shown in FIG. **1**. The oil then enters the eccentric lubrication duct **72** through the port **70**. Through outflow orifices **74** and **75** the oil is dispersed into the casing and moving parts of the sealed compressor.

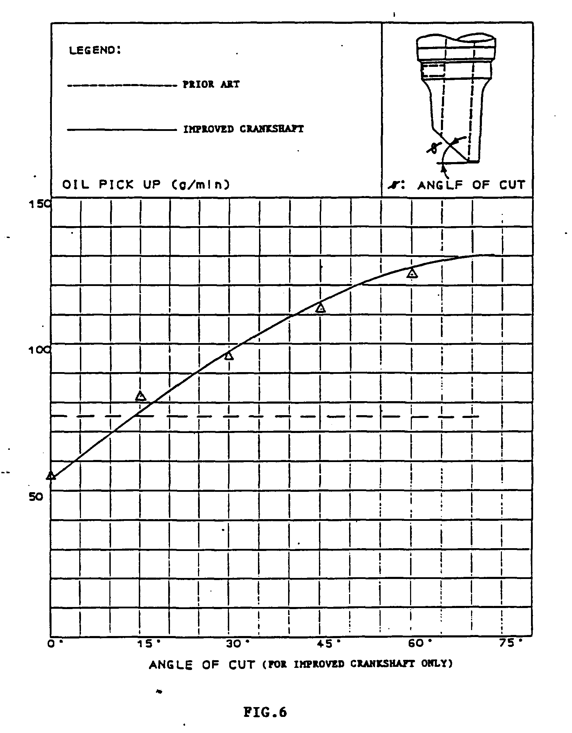

FIG. **6** is a table summarising the oil pick rate of a lubrication system using a prior art crankshaft according to FIG. **3** versus one using the preferred embodiment of the present invention. It is worthwhile noting that with an angle of cut ø of more than 15 degrees, the oil pick up rate measured in grams per minute is equivalent to that of a lubrication system using prior art crankshafts. The data for the oil pick up rate in FIG. **6** also confirm that the preferred embodiment of the present invention could deliver as much as 1.5 times the normal oil pick up rate without changing the diameter of the crankshaft. All one needs to do is to increase the angle of cut ø accordingly. Alternatively, a combination of angles of cut ø and angle β for the interior lubrication duct **64** could increase the oil pick up rate to suit a large variety of applications. It follows that the present invention not only increases the oil pumping capacity of lubrication systems, but also simplifies the manufacture of such systems.

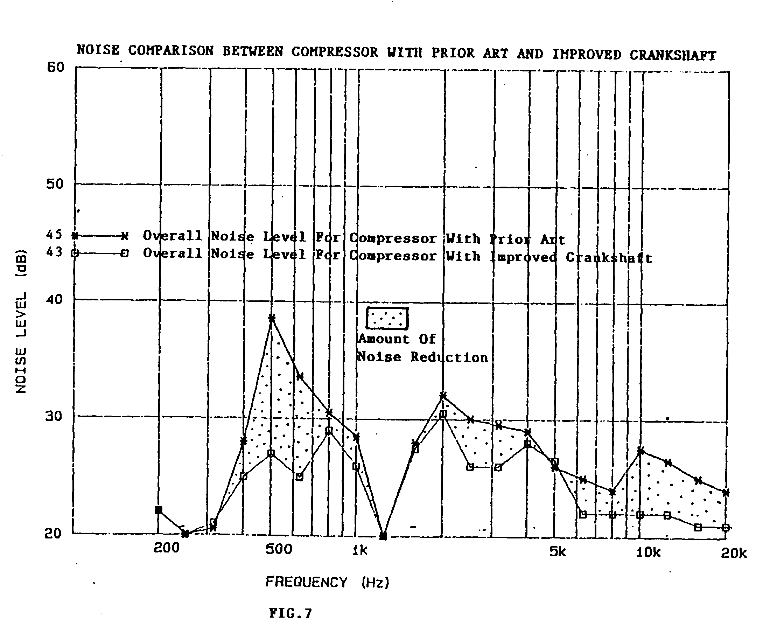

FIG. **7** is a chart comparing the noise emissions of sealed compressor using a prior art crankshaft in accordance to FIG. **3** versus one using the preferred embodiment of the present invention. In each case, the noise sensor is placed 10 cm from the exterior of the sealed casing of an identical compressor. Over the entire range of frequencies, lubrication system using the preferred embodiment of the present invention emitted less noise than one using prior art crankshafts. Referring again to FIG. **7**, the noise reduction is at an maximum - almost 10 decibel (dB) - at 500 hertz (Hz). Moreover, a compressor using the preferred embodiment of the present invention achieved noise reduction over one using a prior art crankshaft at almost every frequency which was tested, e.g., 200 Hz to 20,000 Hz.

While the present invention has been particularly described with reference from FIGS. **1** to **7** with emphasis on the crankshaft lubrication system for a sealed compressor of cooling fluids, it should be understood that the figures are for illustration only and should not be taken as a limitation on the invention. In addition, it is clear that the apparatus of the present invention has utility in many applications where lubrication and cooling of compressors bearings and moving parts are required. It is contemplated that many changes and modifications may be made by one of ordinary skill in the art without departing from the scope of the invention as claimed.

## Claims

1. A crankshaft assembly for a sealed compressor (10) comprising a sealed casing (12) in which at least one alternating motor-driven compressor assembly (14) and at least one oil reservoir (28) are disposed therein, the crankshaft assembly including at least one vertical-axis crankshaft (30) provided with at least one longitudinal interior lubrication duct (64) communicating with points (68) on an exterior surface of said crankshaft (30) and with an upper end of the crankshaft (30) eccentric to the axis of rotation thereof,
a lower member (60) coupled to a lower end of said interior duct (64) of the crankshaft and comprising a substantially conical nose section arranged to be submerged in said oil reservoir (28),
characterised in that said lower member (60) is integrated with said crankshaft, and said nose section of said lower member terminates in an elliptical opening (62), the plane parallel with said elliptical opening (62) having an angle of cut (ø) with an imaginary plane, said imaginary plane being perpendicular to the vertical-axis (61) of rotation of said crankshaft (30).

2. A crankshaft according to claim 1 wherein the longitudinal-axis of said interior lubrication duct (64) has an angle β with respect to the vertical-axis (61) of said crankshaft (30).

3. A crankshaft assembly as claimed in any preceding claim, wherein the upper end of the interior lubrication duct (64) ends in a first substantially conical section and a second substantially conical section of variable contour depending on a profile of the crankshaft.

4. A crankshaft assembly as claimed in any preceding claim, wherein said angle of cut of the elliptical opening (62) is selected in accordance with the pumping rate required for the sealed compressor.

5. A sealed compressor (10) comprising a sealed casing (13) in which at least one alternating motor-driven compressor assembly (14) and at least one oil reservoir (28) are disposed, said motor-driven compressor assembly (14) comprising a crankshaft assembly as claimed in any preceding claim.

## Patentansprüche

1. Kurbelwellenanordnung für einen geschlossenen bzw. abgedichteten Kompressor (10) mit: einem geschlossenen Gehäuse (12), innerhalb welchem wenigstens eine wechselmotor-betriebene Kompressoranordnung (14) und wenigstens ein Ölbehälter bzw. Ölsammelbehälter (28) angeordnet sind, wenigstens einer Kurbelwelle (30) mit vertikaler Achse, welche wenigstens eine longitudinale innere Schmierleitung (64) aufweist, die mit Stellen (68) an einer äußeren Oberfläche der Kurbelwelle (30) und mit einem exzentrisch zu deren Rotationsachse angeordneten oberen Ende der Kurbelwelle (30) kommuniziert,
einem unteren Teil (60), das mit einem unteren Ende der inneren Leitung (64) der Kurbelwelle verbunden ist und einen im wesentlichen konischen Stirn- bzw. Nasenabschnitt aufweist, der zum Eintauchen in den Ölbehälter (28) angeordnet ist,
dadurch gekennzeichnet, daß das untere Teil (60) einstückig mit der Kurbelwelle ist, und der Stirnabschnitt des unteren Teils mit einer elliptischen Öffnung (62) abgeschlossen ist, wobei die zur elliptischen Öffnung (62) parallele Ebene einen Schnittwinkel (ø) mit einer imaginären Ebene aufweist, welche senkrecht zu der vertikalen Rotationsachse (61) der Kurbelwelle (30) steht.

2. Kurbelwelle nach Anspruch 1, bei welcher die longitudinale Achse der inneren Schmierleitung (64) einen Winkel β gegenüber der vertikalen Achse (61) der Kurbelwelle (30) einnimmt.

3. Kurbelwellenanordnung nach einem der vorstehenden Ansprüche, bei welcher das untere Ende der inneren Schmierleitung (60) in einem ersten im wesentlichen konischen Abschnitt und einem zweiten im wesentlichen konischen Abschnitt mit variabler Kontur, welche vom Profil bzw. einer Querschnittsform der Kurbelwelle abhängt, endet.

4. Kurbelwellenanordnung aus einem der vorstehenden Ansprüche, bei welcher der Schnittwinkel der elliptischen Öffnung (62) nach Maßgabe der für den geschlossenen Kompressor geforderten Pumprate ausgewählt ist.

5. Geschlossener bzw. abgedichteter Kompressor (10) mit einem geschlossenen Gehäuse (13), innerhalb welchem wenigstens eine wechselmotor-betriebene Kompressoranordnung (14) und wenigstens ein Ölbehälter bzw. Ölsammelbehälter (28) angeordnet sind, wobei die motorbetriebene Kompressoranordnung (14) eine Kurbelwellenordnung nach einem der vorstehenden Ansprüche aufweist.

## Revendications

1. Ensemble de vilebrequin destiné à un compresseur étanche (10) comportant un carter étanche (12) dans lequel sont disposés au moins un ensemble de compresseur entraîné par moteur à courant alternatif (14) et au moins un réservoir d'huile (28), l'ensemble de vilebrequin comprenant au moins un vilebrequin à axe vertical (30) doté d'au moins un conduit de graissage interne longitudinal (64) communiquant avec des points (68) situés sur une surface externe dudit vilebrequin (30) et avec une extrémité supérieure du vilebrequin (30) décentrée par rapport à son axe de rotation,
un élément inférieur (60) étant couplé à une extrémité inférieure dudit conduit interne (64) du vilebrequin et comportant une section formant nez sensiblement conique prévue pour être plongée dans ledit réservoir à huile (28),
caractérisé en ce que ledit élément inférieur (60) est solidaire dudit vilebrequin, et en ce que ladite section formant nez dudit élément inférieur se termine par une ouverture elliptique (62), le plan parallèle à ladite ouverture elliptique (62) formant un angle de coupe (φ) avec un plan imaginaire, ledit plan imaginaire étant perpendiculaire à l'axe vertical (61) de rotation dudit vilebrequin (30).

2. Vilebrequin selon la revendication 1, dans lequel l'axe longitudinal dudit conduit de graissage interne (64) forme un angle β avec l'axe vertical (61) dudit vilebrequin (30).

3. Ensemble de vilebrequin selon l'une quelconque des revendications précédentes, dans lequel l'extrémité supérieure du conduit de graissage interne (64) se termine par une première section sensiblement conique et par une seconde section sensiblement conique dont le contour varie en fonction d'un profil du vilebrequin.

4. Ensemble de vilebrequin selon l'une quelconque des revendications précédentes, dans lequel ledit angle de coupe de l'ouverture elliptique (62) est sélectionné en fonction du débit de pompage requis pour le compresseur étanche.

5. Compresseur étanche (10) comportant un boîtier étanche (13) dans lequel sont disposés au moins un ensemble de compresseur (14) entraîné par moteur alternatif et au moins un réservoir d'huile (28), ledit ensemble de compresseur entraîné par moteur (14) comportant un ensemble de vilebrequin selon l'une quelconque des revendications précédentes.
